# EUROPEAN PATENT APPLICATION

(11) **EP 2 625 961 A1**
(43) Date of publication of application: **14.08.2013**
(21) Application number: 12425028.3
(22) Date of filing: 13.02.2012
(51) Int. Cl.: A23D 9/00, A23L 1/212, A23L 1/221

(54) **Method for obtaining a packaged food preparation containing fried alliaceae vegetables and packaged food preparation obtained by such a method**

(71) Applicant: Societã Agricola Taflo s.s. di Visentin Lucia & C., 36026 Pojana Maggiore (VI) (IT)
(72) Inventor: Visentin, Lucia, 36026 Pojana Maggiore (Vicenza) (IT); Negretto, Pierguido, 36026 Pojana Maggiore (Vicenza) (IT)
(74) Representative: Zambardino, Umberto

(57) **Abstract**

The present invention relates to a food preparation comprising a packaged food oil and at least one vegetable from Alliacee cooked in said food oil. The Alliaceae vegetable is preferably onion, garlic or combinations thereof. Such food preparation can be obtained according to the present invention by a method comprising the steps of:
- heating a mixture comprising a food oil and at least one vegetable from Alliaceae until reaching a temperature of at least 100°C and lower than the smoke point of said food oil,
- cooking of said mixture under continuous stirring up to obtain a substantially uniform browning of said at least one vegetable from Alliaceae,
- packaging the resulting mixture containing the at least one fried vegetable from Alliaceae and the cooking food oil in at least one container for foods.

The packaged food preparation of the invention can be advantageously used in household, industry and collective catering, as substitute for the traditional fried of Alliaceae vegetables as a food base from which to obtain food or food products according to the most varied recipes particularly of the Mediterranean cuisine.

## Description

### DESCRIPTION

### Field of application

The present invention relates to the food sector and in particular to the production of food preparations for household, industrial and/or collective catering use as food bases in the subsequent preparation of finished foods or food products and particularly food products ready for consumption.

In particular, the present invention relates to a packaged food preparation comprising fried vegetables from Alliaceae which can be used effectively as a food base for the uses mentioned above.

The present invention also relates to a method for obtaining a food preparation of the above type.

### Prior Art

As it is known, the household, industrial or collective catering preparation of foods or food products such as sauces, soups, broths, etc. often requires the prior preparation of a fried based on vegetables, especially onion and/or garlic. The fried food is used as a food base within said household or industrial preparation for giving specific characteristics of taste and roundness to the final food or food product, in particular according to the dictates of the Mediterranean cuisine.

The food components commonly used for the preparation of a fried are: vegetable oil, onion and/or garlic to which additional vegetable components can be added such as carrots and celery and/or spices such as salt and pepper.

Although the fried based on vegetables such as onion and/or garlic has been always part of culinary tradition, in particular of the Mediterranean cuisine and is fundamental to many recipes and preparations, its implementation is difficult and requires considerable precautions as well as a relatively long times so as to obtain a vegetable food base that has acceptable organoleptic and nutritional characteristics for subsequent use in the preparation of the final food or food product.

In fact, it is noteworthy that vegetables such as onions and garlic, as they are constituted by about 80% water, must be cooked slowly and gently to prevent them from being burned or darkened rather than just browned (or turn blonded) as required by the traditional preparation of a good fry. In addition, there is to say that the vegetables are previously processed before being fried through operations such as peeling and cutting which requires a certain time and, in the case of the onion for example, this also involves a certain physical discomfort for the operator due to the delivery of substances that make eyes water which are released during the cutting of this vegetable.

Fried of the above type are also prepared at industrial level by the food industry in the context of the production lines of food preparations that incorporate them, for example fresh or frozen food products such as sauces, soups, broths, ready meals based on rice, pasta, meat and/or fish etc. In this case, there is to say that the food industry usually purchases from specialized companies a vegetable material, such as garlic and/or onion, already worked as to peeling and possible milling; that material is used as starting material for the preparation of fried.

However, a vegetable material so purchased has a short shelf life because it is very susceptible to degradation phenomena and bacterial contamination, and it also needs to be strictly stored under conditioned temperature until use.

This clearly entails storage and managing costs of the worked vegetable material which are quite relevant.

Even if one would purchase whole vegetables, the above costs would be mitigated only in part and it would be however necessary to provide appropriate equipments for peeling and chopping the vegetables to be used in the production line of the food products with a consequent increase in total costs resulting from design of such equipments and from managing of the entire production process.

The technical problem underlying the present invention is to provide a food preparation having characteristics such that it can be used effectively as a food base in the household, industrial or collective catering preparation of foods or food products without having the disadvantages previously cited with reference to the traditional fried of the prior art.

### Summary of the invention

This technical problem is solved according to the present invention by a food preparation comprising an edible oil and at least one vegetable from Alliaceae fried in said edible oil, said food preparation being packaged food in a container for foods.

Such a food preparation can be obtained according to the present invention by a method comprising the steps of:
- heating a mixture comprising a food oil and at least one vegetable from Alliaceae until reaching a temperature of at least 100°C and lower than the smoke point of said edible oil,
- cooking the mixture under continuous stirring up to obtain a substantially uniform browning of said at least one vegetable from Alliaceae,
- packaging the resulting mixture containing the at least one fried vegetable from Alliaceae and the cooking food oil in at least one container for foods.

Preferably, heating temperature is at least 100° C and is comprised in particular between 100°C and 130°C.

### Detailed Description

The term "Alliaceae" means in this description a family of monocotyledonous plants mainly comprising the genus Allium, and often also classified among the Liliaceae. This cosmopolitan family includes herbaceous plants most often fitted with bulb, sometimes a rhizome. The symmetrical flowers have upper ovary and forms an umbrella-like inflorescence while the fruit is like a capsule.

Alliaceae used in the present invention are preferably selected from the group comprising onion, leek, garlic, scallion, Borettane, chive and combinations thereof.

Alliaceae particularly preferred for use in the preparation of the food preparation according to the invention are onion, garlic or combinations thereof.

The term "vegetable from Alliaceae " means in this description any edible part obtained or derived from plants of at least one type belonging to the family of Alliaceae (in particular onion and/or garlic). Alliaceae vegetables may be previously machined in part immediately after the collection to obtain the edible parts of interest and in part stored in a conditioned environment until use.

Those edible parts are constituted in particular by the bulb and/or the fruit and are preferably subjected to a prior processing before cooking in particular peeling and optional cutting and/or subdivision into cubes.

Preferably, the edible part of interest is cut and/or divided into cubes (cubed) so that the vegetable material from Alliaceae used in the food preparation according to the invention includes or consists of individual separate pieces of small dimensions. Such distinct pieces, after cooking (browning) according to the method of the invention, are in the preparation substantially contained and dispersed in the edible oil used for cooking. Preferably, the individual pieces of vegetable material have a shape as cubes even though they may have other functionally equivalent shapes such as scales, flakes and the like. The size of individual pieces of the vegetable material from Alliaceae, to be understood as the maximum extension, is preferably between 1 mm and 10 mm, especially between 2 mm and 3 mm.

Advantageously, the Alliaceae vegetable so divided maintains the organoleptic and nutritional properties of the whole vegetable substantially unaltered, even after cooking with browning in the edible oil carried out according to the present invention, since the cell juices of the vegetable are substantially preserved. At the same time, the subdivision into pieces of the vegetable from Alliaceae allows to expose a large surface area to the cooking in oil carried out according to the present invention.

In the food preparation according to the invention, the food oil is to be understood as any edible oil suitable for cooking/frying of food. It is preferably a vegetable oil, that is an edible oil derived from seeds or other parts of a plant, having a relatively high smoke point so as to heat the vegetables from Alliaceae to a temperature sufficient to ensure that such vegetables can be fried (instead of being boiled) in oil with substantial browning without entailing significant phenomena of oil degradation that might adversely affect the organoleptic and nutritional characteristics of the final preparation.

Preferably, the vegetable oil is selected from the group comprising olive oil, in particular extra-virgin olive oil, peanut oil and refined palm oil.

Preferably, in the food preparation according to the invention, the amount of cooking edible (vegetable) oil is between 15% and 45%, in particular between 25% and 35% by weight on the weight of the at least one uncooked vegetable from Alliaceae.

Advantageously, the food preparation according to the invention may comprise further components different from Alliaceae, as commonly used for conventional fried, for example vegetable components such as carrot and celery (preferably divided into small pieces in a similar way as indicated above for the vegetables from Alliaceae) and/or spices such as salt and pepper.

As regards the method of production of the preparation according to the invention, there is to say that it can comprise at first a step of prior treatment of the vegetable(s) from Alliaceae in order to prepare that / those vegetable/ s in the best conditions for an optimal cooking.

Such treatment may comprise the steps of peeling, cutting and / or subdivision into pieces (e.g. cubing) of the part of the Alliacea of interest, normally the bulb and/or the fruit, in order to obtain a division into distinct pieces, preferably in the form of cubes (but other forms are also possible such as flakes and the like) of reduced dimensions. As mentioned previously, the size of individual pieces are preferably between 1 mm and 10 mm, especially between 2 and 3 mm.

The above operations can be made by equipments for peeling and cutting and/or subdivision into small cubes (dicing). Such equipments are conventional per se.

The steps of heating and cooking may be carried out by introducing firstly a predetermined amount of oil on the bottom of a cooking apparatus (cooking vessel) and then adding the vegetable material from Alliaceae to the edible oil for example in the spread form with the individual pieces immersed at least partially in the edible oil for cooking.

In particular, it is preferable that the amount of oil introduced in the cooking apparatus forms a layer of thickness between 5 mm and 20 mm, for example about 10 mm to facilitate a better cooking and browning of the vegetable(s) from Alliaceae.

Preferably, the amount of edible (vegetable) oil added in the cooking apparatus is between 15% and 45%, in particular between 25% and 35% by weight on the weight of the at least one uncooked vegetable from Alliaceae.

The cooking apparatus is in itself conventional, and may include a metallic container (for example a deep-fryer) made in particular of stainless steel having reduced height and preferably having a very large cooking surface (i.e. high diameter) on which the food oil and the at least one vegetable from Alliaceae are arranged, and mixing means (for example, paddle mixers, etc..) connected to said metallic container for maintaining the mixture of food oil and at least one vegetable from Alliaeceae under continuous stirring in the cooking step and possibly also in the heating step.

In accordance with the method of the invention, the heating of the mixture of food oil and of at least one vegetable from Alliaeceae is carried out until reaching a temperature below the smoke point of the food oil; such a temperature is also substantially maintained for the entire cooking of the at least one vegetable material from Alliaceae carried out according to the invention.

The term "smoke point" means in the present description the temperature at which the heated food oil begins to decompose by altering its molecular structure and forming toxic substances, in particular acrolein. For example, the extra-virgin olive oil, the peanut oil and the refined palm oil as they have smoke point of 210°C , 180°C and 240°C respectively they are among the most suitable oils for the realization of the present invention.

In general it is important that the cooking is carried out at a temperature of at least 100°C and lower than the smoke point of the chosen oil so that the at least one vegetable from Alliaceae is fried in an appropriate manner until substantial browning while limiting degradation phenomena of the cooking oil chosen. Conversely, cooking temperatures lower than 100°C, while ensuring a good stability of the food oil during cooking, are generally insufficient to fry the Alliaceae vegetables in the oil in an appropriate manner in addition to requiring relatively long cooking times. In this case, Alliaceae vegetables may exhibit at the end of the cooking texture and organoleptic properties similar to those of a boiled product instead of a fried product as desired. Instead, in the case cooking temperatures at or above the smoke point were used, it would be greatly increased the risk of release of toxic substances by the food oil and/or of burning phenomena in vegetable material subjected to cooking, thereby resulting in the impairment of the organoleptic and nutritional characteristics desired for the final food preparation.

Preferably, in the method according to the invention, the mixture comprising the food oil and the at least one vegetable from Alliaceae is heated and cooked (fried) at a temperature between 100°C and 130°C which is selected also as a function of the food oil chosen.

In the method according to the invention, the cooking step of the mixture of the food oil and of the at least one vegetable from Alliaceae is carried out by frying the vegetable (or vegetables) into the food oil under continuous stirring for a time sufficient to obtain a browning of the at least one vegetable from Alliaceae substantially uniform.

In the method according to the invention, the browning involves in particular and preferably the formation of a golden surface crust on the at least one vegetable from Alliaceae (in particular on the individual pieces that compose it) while avoiding as much as possible darkening (due in particular to the known Maillard reaction between reducing sugars and the amino groups of proteins and peptides, which leads to the browning of the crust) or burns which may endanger the organoleptic and nutritional properties of the final food preparation. This browning (crust) is substantially uniform along preferably the entire surface of the vegetable thanks to the combined control of the cooking temperature and of the agitation of the mixture subjected to cooking. In particular, the cooking can be performed at low heat and under gentle stirring optionally providing also, if necessary, a system for controlling the cooking temperature (e.g. a sensor) in the apparatus (cooker).

Once reached the point of browning as defined above, the cooking is stopped and the final cooked product comprising the at least one vegetable from Alliaceae fried together with the food oil of cooking is recovered and prepared for packaging operations in particular into a container for foods.

The container for foods can be of any known type, for example can be a rigid, semi-rigid or loose container. For example the container may be made of glass or aluminum with inner casing made of a material suitable for storing food products. In addition, the container may have an airtight closure and can be advantageously re-closable and also can be equipped with a dosing device, in itself conventional, in particular for releasing preset quantities of the food preparation according to the invention from the container during use of the preparation as needed.

The packaging is carried out by introducing the food preparation of the invention as obtained at the end of cooking in preset doses into the respective containers by means of appropriate equipments (e.g. metering devices) per se conventional. Such packaging may also be carried out, if desired, under a modified atmosphere, for example by applying a predetermined vacuum inside the containers or by introducing therein an inert gas such as nitrogen in order to modify the atmosphere inside the containers.

The food preparation so packaged has a long shelf life and can be stored at room temperature before use. Therefore, its storage is advantageously easy and safe.

In any event, the shelf life can also be increased by subjecting the containers containing the food preparation according to the invention to subsequent treatments known in the art for this purpose, in particular to pasteurization.

Such pasteurization may be carried out by heating suddenly the containers containing the food preparation according to the invention to a predetermined temperature for a short time according to the techniques known in the field.

In the light of what has been described above it is evident that the packaged food preparation according to the invention solves brilliantly the technical problem mentioned above and achieves important advantages compared with prior art.

In fact, the packaged food preparation according to the invention has organoleptic and nutritional characteristics comparable if not better than those of conventional fried and not dissimilar from those of the starting whole vegetable from Alliaceae. This is achieved also thanks to the fact that, unlike the classical frying, the vegetables from Alliaceae are fried in specific conditions of heating and cooking such as to obtain a substantial and optimum browning of such vegetables, in particular of the onion. At the same time, the packaged food preparation according to the invention has a relatively long shelf life.

Therefore, the packaged food preparation of the invention can be used effectively and advantageously as a substitute for traditional fried based on Alliaceae (for example onion and/or garlic) as a starting food base for obtaining food or food products according to the most varied recipes in particular but not exclusively of the Mediterranean cuisine.

In particular, as regards the use in the food industry or within the collective catering, the packaged food preparation of the invention is advantageously an intermediate product ready to use which greatly simplifies and speeds up the operations for preparation of the finished products that use a fried based Alliaceae such onion and/or garlic as a food base.

At the same time, thanks to the packaged food preparation of the invention, the food industry can do without a series of operations in the production line of the above finished products which, as mentioned above, are particularly onerous such as the purchase and storage of the raw vegetable material and cooking of the same.

Moreover, the packaged food preparation of the invention can be purchased by the food industry and/or collective catering at the time when there is an actual need for use with a method of packaging and quantities supplied adaptable to each individual need.

As regards instead the retail use of the packaged food preparation of the invention (for example household use or in the collective catering), at least the following advantages are evident:
- considerable saving of time by the user / consumer as he/she can use directly the food preparation of the invention as such as a food base to then continue with the addition of other ingredients depending on the specific culinary composition that he/she will have to prepare,
- reduction of the domestic storage of Alliaceae such as onion and garlic which always involve a certain difficulty for the conservation due to their particular composition,
- elimination of the physical discomfort caused by the liberation of factors making eyes water which are released during the cutting of the Alliaceae, in particular the onion,
- reduction of waste products by the user / consumer, thus reducing the amount of organic waste to be disposed of,
- possibility to use only the amount of food preparation really necessary for the culinary composition of interest (with the unused portion that may continue to be effectively stored in the same container which can be advantageously of the re-closable type), thereby avoiding to waste the part of the Alliaceae vegetable possibly in excess and difficult to preserve as it is often the case of the culinary preparations at home.

The present invention will now be described by means of some examples of realization which are given by way of indicative and not limiting purpose.

### Example 1

### Preparation of a packaged food preparation of fried onions in olive oil

1.00 liter of olive oil is placed in a cooking vessel (cooker) having wide cooking surface (high diameter) and reduced height, so as to form a layer of oil having a thickness of about 6.5 mm.

2 kg of fresh onions (bulb) previously peeled and sliced so as to form small cubes of size between 2 mm and 3 are then added to the olive oil contained in the cooking vessel. The resulting mixture is heated to a temperature of 105°C and cooked (fried) at that temperature under gentle stirring by means of a blade mixer associated with the cooking vessel until substantially uniform browning of the cubes of onion (cooking time of 15-18 minutes).

Once the desired point of browning is reached, the cooking is stopped and the resulting cooked food preparation is recovered from the cooking vessel and packed in preset doses into respective glass containers provided with airtight closure and re-closable.

The containers are then pasteurized in accordance with procedures known in the art which are per se conventional.

The packaged food preparation thus obtained has a long shelf life at room temperature and is suitable for use as such in household, industrial and/or collective catering as a food base for the preparation of sauces, soups and broths and sauces containing fried onion.

### Example 2

### Preparation of a packaged food prepared with onion and garlic fried in olive oil

A food preparation is prepared in accordance with the method described in Example 1 except for the fact that the vegetable material from Alliaceae used at beginning consists of 1,600 g of onion and 400 g of garlic both in the form of small cubes of size between 2 mm and 3 mm.

The packaged food preparation thus obtained has a long shelf life at room temperature and is suitable for use as such in household, industrial and/or collective catering as a food base for the preparation of sauces, soups and broths containing fried onion and fried garlic.

## Claims

1. Food preparation comprising a food oil and at least one vegetable from Alliacee fried in said food oil, said food preparation being packaged in a container for foods.

2. Food preparation according to claim 1, wherein said at least one vegetable from Alliaceae is present in the form of distinct small pieces, preferably cubes, dispersed in said food oil.

3. Food preparation according to claim 2, wherein said pieces have a between 1 mm and 10 mm, preferably between 2 and 3 mm.

4. Food preparation according to any one of the preceding claims, wherein said at least one vegetable from Alliaceae is fried in said food oil up to substantial browning with formation of a golden surface crust substantially uniform on said at least one vegetable from Alliaceae.

5. Food preparation according to any one of the preceding claims, wherein said food oil is a vegetable oil selected from the group comprising olive oil, in particular extra-virgin olive oil, peanut oil and refined palm oil.

6. Food preparation according to any one of the preceding claims, wherein the content of said food oil is between 15% and 45%, preferably between 25% and 35% by weight on the weight of the at least one uncooked vegetable from Alliaceae.

7. Food preparation according to any one of the preceding claims, wherein said at least one vegetable from Alliaceae is selected from the group comprising onion, leek, garlic, scallion, Borettane, chive and combinations thereof.

8. Food preparation according to claim 7, wherein said at least one vegetable is constituted by onion, garlic or combinations thereof.

9. Method for obtaining a food preparation according to any one of the preceding claims, the method comprising the steps of:
- heating a mixture comprising a food oil and at least one vegetable from Alliaceae until reaching a temperature of at least 100°C and lower than the smoke point of said food oil,
- cooking of said mixture under continuous stirring up to obtain a substantially uniform browning of said at least one vegetable from Alliaceae,
- packaging the resulting mixture containing the at least one fried vegetable from Alliaceae and the cooking food oil in at least one container for foods

10. Method according to claim 9 wherein said at least one vegetable from Alliaceae is divided into distinct small pieces, preferably cubes, said distinct pieces having dimensions of between 1 and 10 mm, preferably between 2 and 3 mm.

11. Method according to claim 9 or 10, wherein the amount of food oil introduced in the cooking apparatus forms an oil layer of thickness between 5 mem and 20 mm.

12. Method according to any one of the preceding claims, wherein said cooking step is carried out at a temperature between 100° C and 130° C depending on the selected food oil.

13. Method according to any one of the preceding claims, wherein said packaging step is performed by introducing said mixture containing said at least one fried vegetable from Alliaceae and said cooking food oil into at least one container for foods container in preset doses.

14. Method according to any one of the preceding claims, further comprising the step of subjecting said at least one container for food containing said at least one fried vegetable from Alliaceae and said cooking food oil to pasteurization.
